# DEMANDE DE BREVET EUROPEEN

(11) **EP 4 725 887 A1**
(43) Date de publication de la demande: **15.04.2026**
(21) Numéro de dépôt: 25207302.8
(22) Date de dépôt: 07.10.2025
(51) Int. Cl.: B66B 11/00, B66B 9/00, B65G 1/04, B65G 1/06, B66B 17/20

(54) **INSTALLATION DE TRANSPORT DE COLIS ET NAVIRE DOTÉ D'UNE TELLE INSTALLATION**

(30) Priorité: 10.10.2024 FR 2410969
(71) Demandeur: Chantiers de l'Atlantique, 44613 Saint Nazaire Cedex (FR)
(72) Inventeur: NEYRAUD, Jacques, 44210 PORNIC (FR); JANVIER, François, 44250 SAINT-BREVIN-LES-PINS (FR); TALLOURD, Willy, 44600 SAINT-NAZAIRE (FR)
(74) Mandataire: Regimbeau

(57) **Abrégé**

La présente invention concerne une installation (3) de transport de colis (4), comportant une cage d'ascenseur (5) comprenant une cabine d'ascenseur (7) mobile entre au moins deux étages (E1-E6), et une unité mobile (9) de transport de colis (4) comprenant un convoyeur mobile (13),
au moins deux étages (E1-E6) comprenant chacun un premier accès (15) à la cabine d'ascenseur (7), parmi lesquels au moins un étage de chargement (E1) comporte un convoyeur de chargement (17) de colis (4) sur l'unité mobile (9) et au moins un étage de réception (E3-E6) comporte un convoyeur de réception (19) de colis (4) depuis l'unité mobile (9),
l'unité mobile (9) étant mobile entre une position de repos hors de la cabine d'ascenseur (7) et une position d'utilisation dans la cabine d'ascenseur (7).

L'invention concerne également un navire (1) comportant une telle installation (3).

## Description

### DOMAINE DE L'INVENTION

La présente invention se rapporte à une installation de transport de colis, ainsi qu'à un navire doté d'une telle installation.

### ETAT DE LA TECHNIQUE

Dans un bâtiment, tel qu'un navire, de nombreux colis sont emmenés d'un étage (également appelé pont sur un navire) de stockage ou de production vers des étages d'utilisation et/ou de stockage temporaire de ces colis.

De tels colis sont par exemple des colis de linge propre, de bagages ou des consommables, tels que des boissons ou de la nourriture pour un bar ou un restaurant.

Le transport de ces colis est réalisé au moyen de chariots poussés par des personnes. Ainsi, pour des trajets horizontaux, le transport est simplement réalisé par poussée du chariot. Pour des transports verticaux, le transport est réalisé à l'aide d'ascenseurs de service non spécifiques à cette tâche, lequel peut également être un monte-charge ou analogue.

En effet, il peut exister une contrainte d'encombrement limitant le nombre d'ascenseurs, tel que par exemple sur un navire.

Toutefois, un tel transport génère des perturbations au niveau des ascenseurs de service et nécessite un nombre important de manipulations humaines.

Ainsi, les perturbations relevées sont notamment les suivantes :
- la gestion du traitement et des stocks de colis n'est pas aisée,
- les flux de colis ne sont pas facilement traçables,
- il existe un risque d'indisponibilité des colis, lesquels contiennent par exemple du linge ou des consommables, pour les personnes ayant besoin de ces colis,
- l'espace de travail est encombré dans les lieux de préparation des colis, par exemple dans une buanderie,
- le temps de transport des colis est fortement allongé,
- le flux de personnes et de chariots transitant dans les ascenseurs et les étages du navire est important, générant des temps d'attente non productif, et la mobilisation d'un grand nombre de personnes pour réaliser les transports dans un délai contraint,
- il existe un cumul de flux de colis de natures différentes au même moment, par exemple au début et à la fin d'une croisière sur un navire, et les pics de trafic peuvent se superposer,
- les flux de colis montants et descendants ne sont pas séparés, par exemple un flux montant de linge propre et un flux descendant de linge sale.

Ainsi, notamment sur un navire, le transport de colis est peu optimisé du fait de nombreuses perturbations.

Le document JP H07 100594 B2 décrit notamment un dispositif de transport de matériels pour travaux de construction. Le document CN 110494381 A décrit notamment un système d'ascenseur.

### EXPOSE DE L'INVENTION

La présente invention vise à pallier tout ou partie des inconvénients cités ci-dessus.

L'invention a notamment pour but de fournir une installation de transport de colis dont les flux sont optimisés et fortement automatisés ce qui limite les opérations manuelles.

Selon un premier aspect, l'invention propose une installation de transport de colis, remarquable en ce qu'elle comporte :
- une cage d'ascenseur comprenant une cabine d'ascenseur mobile entre au moins deux étages,
- une unité mobile de transport de colis, l'unité mobile comprenant un châssis amovible portant un convoyeur mobile de chargement/déchargement de colis, le convoyeur mobile étant de préférence mobile uniquement en translation par rapport au châssis amovible,
l'installation étant telle que :
- la cabine d'ascenseur est configurée pour recevoir l'unité mobile,
- au moins deux étages comprennent chacun un premier accès à la cabine d'ascenseur, parmi lesquels au moins un étage de chargement comporte un convoyeur de chargement de colis sur l'unité mobile et au moins un étage de réception comporte un convoyeur de réception de colis depuis l'unité mobile, chaque premier accès étant configuré pour permettre le transfert de colis soit depuis le convoyeur de chargement vers le convoyeur mobile soit depuis le convoyeur mobile vers le convoyeur de réception, et
- l'unité mobile est mobile entre une position de repos hors de la cabine d'ascenseur et une position d'utilisation dans la cabine d'ascenseur, position d'utilisation dans laquelle le convoyeur mobile occupe de préférence
   une position déployée, pour effectuer un transfert de colis, se rapprochant du convoyeur de chargement lors d'un transfert de colis entre l'unité mobile et le convoyeur de chargement, ou se rapprochant du convoyeur de réception lors d'un transfert de colis entre l'unité mobile et le convoyeur de réception, et
   une position rétractée dans l'unité mobile, une fois le transfert de colis effectué, le transfert de la position d'utilisation vers la position de repos et inversement étant réalisé par passage de l'unité mobile à travers le premier accès.

Ainsi, grâce à l'invention, le nombre de personnes employées au transport de colis est réduit et la gestion des colis et de leurs flux est améliorée. Plus généralement, le transport de colis est optimisé.

L'installation selon l'invention est avantageusement et optionnellement complétée par les caractéristiques suivantes, prises seules ou en une quelconque de leurs combinaisons techniquement possibles :
- Dans la position d'utilisation de l'unité mobile, le châssis amovible est immobile dans la cabine d'ascenseur.
- Chaque étage comprend un second accès à la cabine d'ascenseur, le second accès étant configuré pour permettre l'accès de la cabine d'ascenseur à au moins une personne afin de permettre son transfert d'un étage à un autre. Ainsi, l'invention permet avec une même installation d'assurer le transport de personnes et le transport de colis de façon manuelle ou automatisée.
- Le premier accès et le second accès sont disjoints. Ainsi, l'accès à la cabine d'ascenseur par une personne via le second accès est facilement empêché lors du transport de colis de façon automatisée.
- Chaque convoyeur est un convoyeur à rouleaux, de préférence à rouleaux motorisés. Ainsi, chaque convoyeur est réalisé de manière simple et fiable. Par « chaque convoyeur », il faut notamment comprendre chaque convoyeur de l'ensemble de convoyeurs formé par le convoyeur mobile, chaque convoyeur de chargement et chaque convoyeur de réception.
- Chaque convoyeur est à niveaux multiples, de préférence entre quatre et huit niveaux. Ainsi, le transport des colis est optimisé, notamment du fait que le nombre de colis pouvant être transportés par le convoyeur mobile est augmenté malgré l'espace restreint de la cabine d'ascenseur. Plus globalement, l'utilisation de convoyeurs à niveaux multiples permet de diminuer l'espace occupé par ces convoyeurs pour un même nombre de colis stockés ou à transporter.
- Chaque convoyeur est configuré pour recevoir des colis.
- Tous les convoyeurs comportent le même nombre de niveaux. Ainsi, la gestion des colis et de leur flux est davantage optimisée.
- Au moins un étage comporte une zone de stockage recevant l'unité mobile dans la position de repos, la zone de stockage étant directement attenante à la cage d'ascenseur. Ainsi, le stockage de l'unité mobile est réalisé de manière simple et rapide.
- La zone de stockage est située entre la cage d'ascenseur et le convoyeur de réception, ou la zone de stockage est située entre la cage d'ascenseur et le convoyeur de chargement. Ainsi, le convoyeur mobile de l'unité mobile peut également servir au stockage de colis lors de la distribution de colis ou lors de préparation de colis.
- Alternativement, la zone de stockage est disposée à un étage dépourvu de convoyeur de réception et dépourvu de convoyeur de chargement. Ainsi, la zone de stockage est isolée.
- La zone de stockage est un sas configuré pour retarder la propagation d'un incendie depuis la cage d'ascenseur vers l'étage comportant la zone de stockage ou inversement. Ainsi, la zone de stockage est davantage isolée.
- L'installation comprend une unité d'exploitation et des détecteurs de colis configurés pour réaliser le comptage de colis présents sur chaque convoyeur, l'unité d'exploitation étant configurée pour commander en fonction du nombre de colis comptés par les détecteurs de colis, à la fois le transfert de la position d'utilisation de l'unité mobile vers la position de repos et inversement, la quantité de colis chargés sur le convoyeur mobile par le convoyeur de chargement, et la quantité de colis déchargés par le convoyeur mobile sur le convoyeur de réception. Ainsi, la gestion des colis et de leur flux est optimisée.
- Chaque colis est doté d'un identificateur configuré pour être détecté par les détecteurs de colis. Ainsi, la détection des colis est simplifiée, et la gestion des colis et de leur flux est davantage optimisée.
- L'unité d'exploitation est configurée pour commander en fonction du nombre de colis comptés par les détecteurs de colis et en fonction d'une donnée présente dans l'identificateur de chaque colis et détectée par les détecteurs de colis, la donnée étant relative à la nature du colis respectif, à la fois le transfert de la position d'utilisation de l'unité mobile vers la position de repos et inversement, la quantité de colis chargés sur le convoyeur mobile par le convoyeur de chargement, et la quantité de colis déchargés par le convoyeur mobile sur le convoyeur de réception. Ainsi, la gestion des colis et de leur flux est davantage optimisée.
- L'unité mobile comprend un mécanisme de transfert configuré pour réaliser le transfert de la position d'utilisation vers la position de repos et inversement. Ainsi, le transfert d'une position à l'autre est réalisé de manière simple. Par « et inversement », il faut comprendre que le mécanisme de transfert est également configuré pour réaliser le transfert de la position de repos vers la position d'utilisation.
- Le mécanisme de transfert comprend un mécanisme moteur configuré pour réaliser automatiquement le transfert de la position d'utilisation vers la position de repos et inversement. Ainsi, le transfert d'une position à l'autre est réalisé de manière simple et automatisée, et l'unité mobile ne requiert pas de manipulation par une personne pour son transfert d'une position à une autre.
- La cabine d'ascenseur comprend un dispositif de détection de présence, l'unité d'exploitation étant configurée pour empêcher le transfert de la position de repos vers la position d'utilisation tant que le dispositif de détection de présence détecte la présence d'une personne dans la cabine d'ascenseur. Ainsi, la sécurité de l'installation est améliorée.
- Le premier accès comprend une porte automatique. Ainsi, la gestion des colis et de leur flux est davantage optimisée.
- Le second accès comprend une porte automatique. Ainsi, le transport de personnes dans l'ascenseur est également optimisé.
- Chaque porte automatique est une porte à ouverture automatique et fermeture automatique. Ainsi, le temps d'utilisation de la cabine d'ascenseur est optimisé.
- L'unité d'exploitation est configurée pour commander le déplacement de la cabine d'ascenseur au moins lorsque l'unité mobile est dans sa position d'utilisation. Ainsi, la gestion des colis et de leur flux est davantage optimisée.
- L'étage de chargement est inférieur à l'étage de réception. Cette disposition est particulièrement avantageuse notamment sur un navire, dans lequel l'étage dédié à la préparation de colis est généralement inférieur à l'étage de distribution de colis.
- La cage d'ascenseur comprend au moins trois étages, de préférence au moins six étages.
- Chaque colis est un colis de linge propre ou un colis de consommables, de préférence un colis de linge propre.
- L'identificateur est une puce RFID. Ainsi, l'identification est réalisée à distance et ce de manière particulièrement simple et rapide.
- Lorsque l'unité mobile est dans la cabine d'ascenseur, chaque second accès est fermé. Ainsi, la sécurité de l'installation est améliorée. En effet, on garantit qu'aucune personne ne peut accéder à la cabine d'ascenseur lorsqu'elle contient l'unité mobile.
- Lorsqu'une personne est dans la cabine d'ascenseur, chaque premier accès est fermé. Ainsi, la sécurité de l'installation est améliorée. En effet, on garantit que l'unité mobile ne peut accéder à la cabine d'ascenseur lorsqu'elle contient une personne.

Selon un deuxième aspect, l'invention propose également un navire comportant une installation telle que précédemment décrite.

Ainsi, un navire présentant un espace interne limité, l'utilisation d'une telle installation y est particulièrement avantageuse.

Le navire selon l'invention est avantageusement et optionnellement complété par les caractéristiques suivantes, prises seules ou en une quelconque de leurs combinaisons techniquement possibles :
- Le navire comporte au moins deux étages, de préférence au moins trois étages, plus préférentiellement au moins six étages.
- Le navire est un navire de croisière. Un tel navire de croisière est configuré pour le transport de passagers, et se distingue notamment d'un navire cargo qui est configuré pour le transport de marchandises. Ainsi, du fait qu'un grand nombre de colis doit transiter entre des étages au sein d'un navire de croisière dans lequel également un grand nombre de personnes doit transiter entre des étages, la présence d'une telle installation y est particulièrement adaptée.

### DESCRIPTION DES FIGURES

D'autres caractéristiques, buts et avantages de l'invention ressortiront de la description détaillée ci-après, laquelle est purement illustrative et non limitative, et laquelle doit être lue au regard des dessins annexés, donnés à titre d'exemples non limitatifs et sur lesquels :
- la figure 1 est une vue schématique de côté d'un navire comprenant une installation de transport de colis selon un premier mode de réalisation ;
- la figure 2 est une vue conforme à la figure 1 dans laquelle l'installation se trouve dans un état de fonctionnement ;
- la figure 3 est une vue conforme à la figure 1 dans laquelle l'installation se trouve dans un état de fonctionnement ;
- la figure 4 est une vue conforme à la figure 1 dans laquelle l'installation se trouve dans un état de fonctionnement ;
- la figure 5 est une vue conforme à la figure 1 dans laquelle l'installation se trouve dans un état de fonctionnement ;
- la figure 6 est une vue conforme à la figure 1 dans laquelle l'installation se trouve dans un état de fonctionnement ;
- la figure 7 est une vue schématique en perspective d'une unité mobile selon une variante de réalisation de l'installation ;
- la figure 8 est une vue schématique en perspective d'un convoyeur de chargement selon une variante de réalisation de l'installation ;
- la figure 9 est une vue schématique en perspective d'un convoyeur de réception selon une variante de réalisation de l'installation ;
- la figure 10 est une vue schématique de côté d'un navire comprenant une installation de transport de colis selon un deuxième mode de réalisation.

Sur l'ensemble des figures, les éléments similaires sont désignés par des références identiques.

### DESCRIPTION DETAILLEE DE L'INVENTION

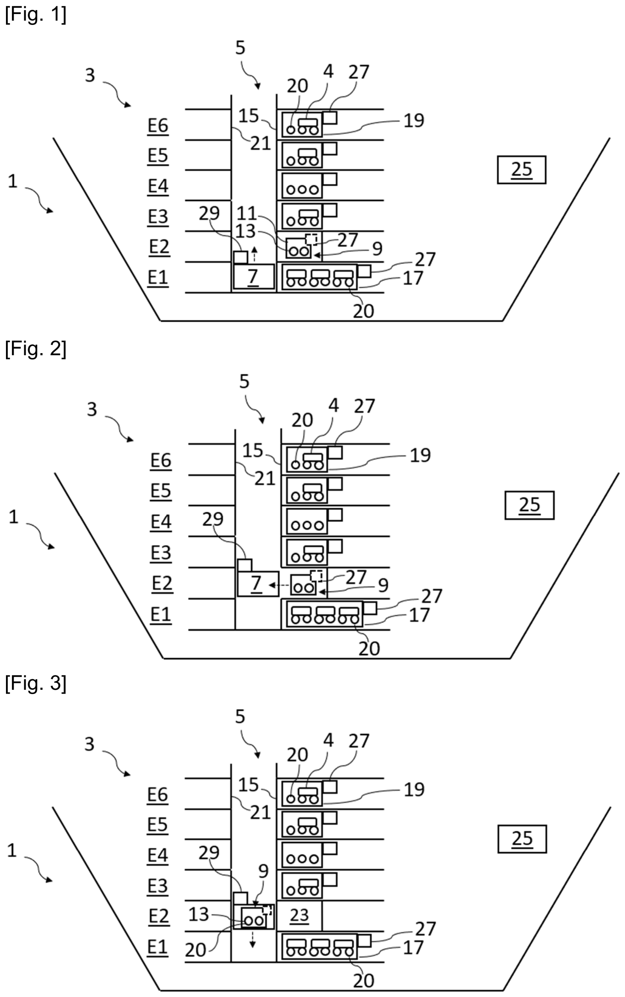

La figure 1 représente schématiquement un navire 1. De préférence, le navire 1 est un navire de croisière.

Avantageusement, le navire 1 comporte au moins deux étages, de préférence au moins trois étages, plus préférentiellement au moins six étages E1-E6.

Le navire 1 comporte une installation 3 de transport de colis 4.

L'installation 3 comporte une cage d'ascenseur 5 comprenant une cabine d'ascenseur 7 mobile entre au moins deux étages E1-E6.

Avantageusement, la cage d'ascenseur 5 comprend au moins trois étages, de préférence au moins six étages E1-E6.

Comme cela est représenté notamment sur la figure 1, la cabine d'ascenseur 7 est mobile entre chacun des six étages E1-E6.

L'installation 3 comporte également une unité mobile 9 de transport de colis 4.

Avantageusement, la cabine d'ascenseur 7 est configurée pour recevoir l'unité mobile 9, comme cela est représenté notamment sur la figure 2 et sur la figure 3.

Avantageusement, l'unité mobile 9 est mobile entre une position de repos hors de la cabine d'ascenseur 7 et une position d'utilisation dans la cabine d'ascenseur 7.

Avantageusement, l'unité mobile 9 comprend un châssis amovible 11 portant un convoyeur mobile 13 de chargement/déchargement de colis 4.

De préférence, l'unité mobile 9 comprend un mécanisme de transfert (non représenté) configuré pour réaliser le transfert de la position d'utilisation vers la position de repos et inversement, c'est-à-dire le transfert de la position de repos vers la position d'utilisation.

Avantageusement, le mécanisme de transfert comprend un mécanisme moteur configuré pour réaliser automatiquement le transfert de la position d'utilisation vers la position de repos et inversement, c'est-à-dire le transfert de la position de repos vers la position d'utilisation.

De préférence, le mécanisme moteur comprend des roues motorisées supportant le châssis amovible 11, lesquelles permettent de transférer l'unité mobile 9 de sa position de repos vers sa position d'utilisation et inversement.

Au moins deux étages E1-E6, dans l'exemple représenté les six étages E1-E6, comprennent chacun un premier accès 15 à la cabine d'ascenseur 7, parmi lesquels au moins un étage de chargement E1 comporte un convoyeur de chargement 17 de colis 4 sur l'unité mobile 9 et au moins un étage de réception E3-E6 comporte un convoyeur de réception 19 de colis 4 depuis l'unité mobile 9.

Un tel premier accès 15 à la cabine d'ascenseur 7 est rendu possible par le fait que la cabine d'ascenseur 7 est mobile dans la cage d'ascenseur 5.

De préférence, l'étage de chargement E1 est inférieur à l'étage de réception E3-E6.

Avantageusement, le premier accès 15 comprend une porte automatique.

Avantageusement, chaque convoyeur 13, 17, 19 - à savoir le convoyeur mobile 13, chaque convoyeur de chargement 17 et chaque convoyeur de réception 19 -, est un convoyeur à rouleaux, de préférence un convoyeur à rouleaux motorisés 20.

Chaque convoyeur 13, 17, 19 - à savoir le convoyeur mobile 13, chaque convoyeur de chargement 17 et chaque convoyeur de réception 19 -, est configuré pour recevoir des colis 4.

Avantageusement, tous les convoyeurs 13, 17, 19 - à savoir le convoyeur mobile 13, chaque convoyeur de chargement 17 et chaque convoyeur de réception 19 - comportent le même nombre de niveaux.

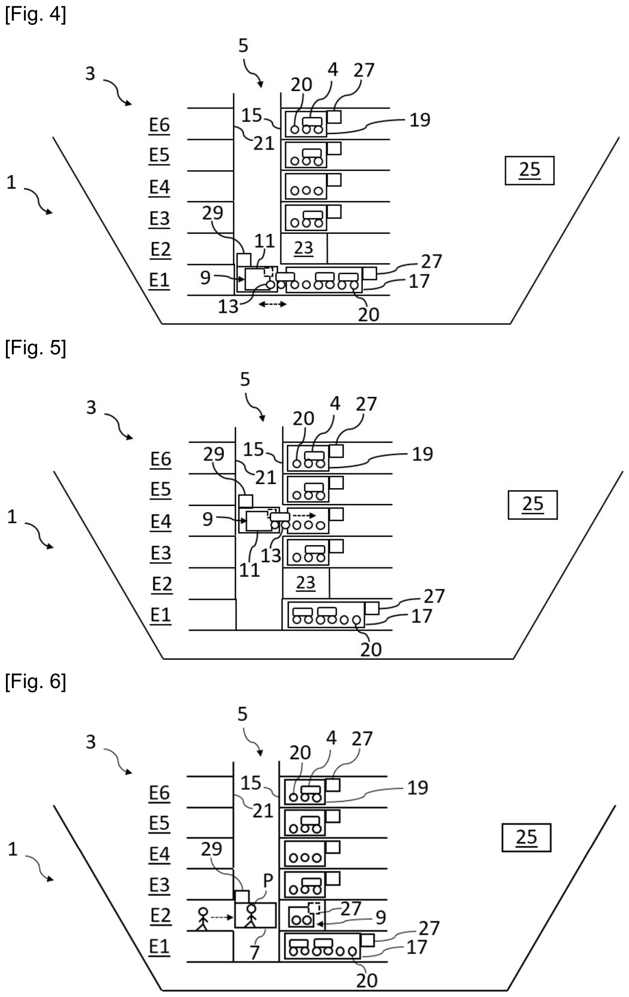

De préférence, le convoyeur mobile 13 est mobile, de préférence uniquement, en translation relativement au châssis amovible 11. Ainsi, le transfert de colis 4 depuis un convoyeur de chargement 17 ou vers un convoyeur de réception 19 est facilité, le convoyeur mobile 13 prenant une position déployée se rapprochant du convoyeur de chargement 17 - comme cela est représenté sur la figure 4 - ou du convoyeur de réception 19 - comme cela est représenté sur la figure 5 - pour effectuer le transfert de colis 4, et une fois le transfert de colis 4 effectué, le convoyeur mobile 13 reprenant une position rétractée dans l'unité mobile 9, de préférence dans le châssis amovible 11, comme cela est notamment représenté sur la figure 3 et sur la figure 6. Ainsi, dans la position d'utilisation, le convoyeur mobile 13 occupe alternativement la position déployée et la position rétractée. En d'autres termes, dans la position d'utilisation de l'unité mobile 9, le convoyeur mobile est configuré pour occuper chacune de la position déployée et de la position rétractée, et ce, alternativement et/ou successivement.

De préférence, chaque convoyeur 13, 17, 19 - à savoir le convoyeur mobile 13, chaque convoyeur de chargement 17 et chaque convoyeur de réception 19 -, comporte exactement un niveau, comme cela est représenté sur les figures 1 à 6, ou plusieurs niveaux, comme par exemple entre quatre et huit niveaux, voire exactement cinq niveaux.

Avantageusement, l'unité mobile 9 est mobile entre une position de repos hors de la cabine d'ascenseur 7 - comme cela est notamment représenté sur la figure 1 - et une position d'utilisation dans la cabine d'ascenseur 7 - comme cela est notamment représenté sur la figure 3. Le transfert de la position d'utilisation vers la position de repos et inversement, c'est-à-dire le transfert de la position de repos vers la position d'utilisation, est réalisé par passage de l'unité mobile 9 à travers le premier accès 15 - comme cela est notamment représenté sur la figure 2. Avantageusement, dans la position d'utilisation de l'unité mobile 9, le châssis amovible 11 est immobile dans la cabine d'ascenseur 7.

De préférence, pour le transfert de la position d'utilisation vers la position de repos et inversement, c'est-à-dire pour le transfert de la position de repos vers la position d'utilisation, l'unité mobile passe à travers le premier accès 15 de l'étage E2.

Avantageusement, chaque étage comprend un second accès 21 à la cabine d'ascenseur 7. De préférence, le premier accès 15 et le second accès 21 sont disjoints. Par exemple, pour chaque étage E1-E6, le premier accès 15 et le second accès 21 sont disposés dans des parois opposées de la cage d'ascenseur 5.

Le second accès 21 est configuré pour permettre l'accès de la cabine d'ascenseur 7 à au moins une personne P afin de permettre son transfert d'un étage E1-E6 à un autre, comme cela est notamment représenté sur la figure 6.

Avantageusement, le second accès 21 comprend une porte automatique.

De préférence, chaque porte automatique est une porte à ouverture automatique et fermeture automatique.

Avantageusement, lorsque l'unité mobile 9 est dans la cabine d'ascenseur 7, chaque second accès 21 est fermé.

Avantageusement, lorsqu'une personne P est dans la cabine d'ascenseur 7, chaque premier accès 15 est fermé.

Avantageusement, au moins un étage E2 comporte une zone de stockage 23 recevant l'unité mobile 9 dans la position de repos. De préférence, la zone de stockage 23 est directement attenante à la cage d'ascenseur 5.

Dans ce premier mode de réalisation de l'installation 3, la zone de stockage 23 est disposée à un étage E2 dépourvu de convoyeur de réception 19 et dépourvu de convoyeur de chargement 17.

De préférence, la zone de stockage 23 est un sas configuré pour retarder la propagation d'un incendie depuis la cage d'ascenseur 5 vers l'étage E2 comportant la zone de stockage 23 ou inversement, depuis l'étage E2 comportant la zone de stockage 23 vers la cage d'ascenseur 5.

Avantageusement, chaque premier accès 15 est configuré pour permettre le transfert de colis 4 soit depuis le convoyeur de chargement 17 vers le convoyeur mobile 13 soit depuis le convoyeur mobile 13 vers le convoyeur de réception 19.

Comme cela est représenté sur la figure 4, le premier accès 15 de l'étage E1 est configuré pour permettre le transfert de colis 4 depuis le convoyeur de chargement 17 vers le convoyeur mobile 13.

Comme cela est représenté sur la figure 5, le premier accès 15 de chaque étage E3-E6 est configuré pour permettre le transfert de colis 4 depuis le convoyeur mobile 13 vers le convoyeur de réception 19.

Avantageusement, l'installation 3 comprend une unité d'exploitation 25 et des détecteurs de colis 27 configurés pour réaliser le comptage de colis 4 présents sur chaque convoyeur 13, 17, 19 - à savoir le convoyeur mobile 13, chaque convoyeur de chargement 17 et chaque convoyeur de réception 19.

De préférence, chaque colis 4 est doté d'un identificateur configuré pour être détecté par les détecteurs de colis 27. Avantageusement, l'identificateur est une puce RFID.

Avantageusement, l'unité d'exploitation 25 est configurée pour commander en fonction du nombre de colis 4 comptés par les détecteurs de colis 27, et de préférence également en fonction d'une donnée présente dans l'identificateur de chaque colis 4 et détectée par les détecteurs de colis 27, la donnée étant relative à la nature du colis 4 respectif :
- le transfert de la position d'utilisation de l'unité mobile 9 vers la position de repos ou le transfert de la position de repos de l'unité mobile 9 vers la position d'utilisation,
- la quantité de colis 4 chargés sur le convoyeur mobile 13 par le convoyeur de chargement 17, et
- la quantité de colis 4 déchargés par le convoyeur mobile 13 sur le convoyeur de réception 19.

Avantageusement, l'unité d'exploitation 25 est configurée pour commander le déplacement de la cabine d'ascenseur 7 au moins lorsque l'unité mobile 9 est dans sa position d'utilisation.

De préférence, l'unité d'exploitation 25 est configurée pour commander le déplacement de la cabine d'ascenseur 7.

De préférence, la cabine d'ascenseur 7 comprend un dispositif de détection de présence 29, lequel est avantageusement configuré pour détecter la présence d'une personne P dans la cabine d'ascenseur 7.

Avantageusement, l'unité d'exploitation 25 est configurée pour empêcher le transfert de la position de repos vers la position d'utilisation tant que le dispositif de détection de présence 29 détecte la présence d'une personne P dans la cabine d'ascenseur 7.

Avantageusement, lorsqu'une personne P est dans la cabine d'ascenseur 7, chaque premier accès 15 est fermé.

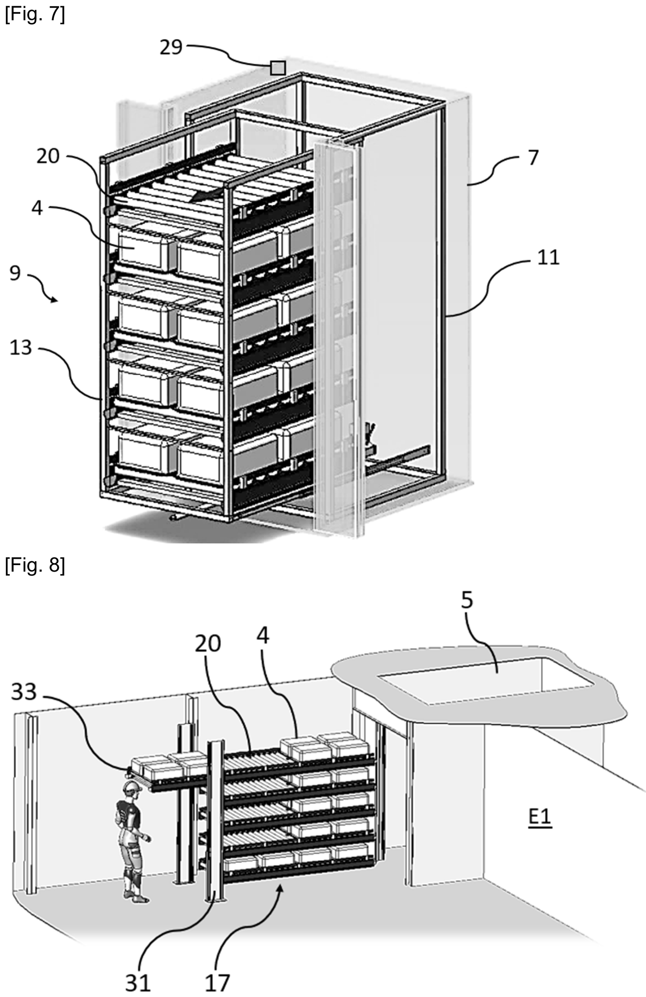

La figure 7 représente une unité mobile 9 selon une variante de réalisation de l'installation 3. L'unité mobile 9 est représentée dans une cabine d'ascenseur 7.

Selon cette variante de réalisation, l'unité mobile 9 comprend un convoyeur mobile 13 qui est à niveaux multiples. De préférence, le convoyeur mobile 13 comprend entre quatre et huit niveaux. L'unité mobile 9 représentée sur la figure 7 comporte un convoyeur mobile 13 doté d'exactement cinq niveaux.

Comme cela est représenté sur la figure 7, le convoyeur mobile 13 occupe une position déployée relativement au châssis mobile 11, et ce pour effectuer le transfert de colis 4.

La figure 8 représente un convoyeur de chargement 17 selon une variante de réalisation de l'installation 3.

Selon cette variante de réalisation, le convoyeur de chargement 17 est à niveaux multiples. De préférence, le convoyeur de chargement 17 comprend entre quatre et huit niveaux. Le convoyeur de chargement 17 représenté sur la figure 8 est doté d'exactement cinq niveaux.

Avantageusement, le convoyeur de chargement 17 est équipé d'un portail de chargement 31, lequel supporte et permet de déplacer verticalement une plateforme à rouleaux 33 permettant de charger un colis 4 ou plusieurs colis 4 sur chacun des niveaux du convoyeur de chargement 17.

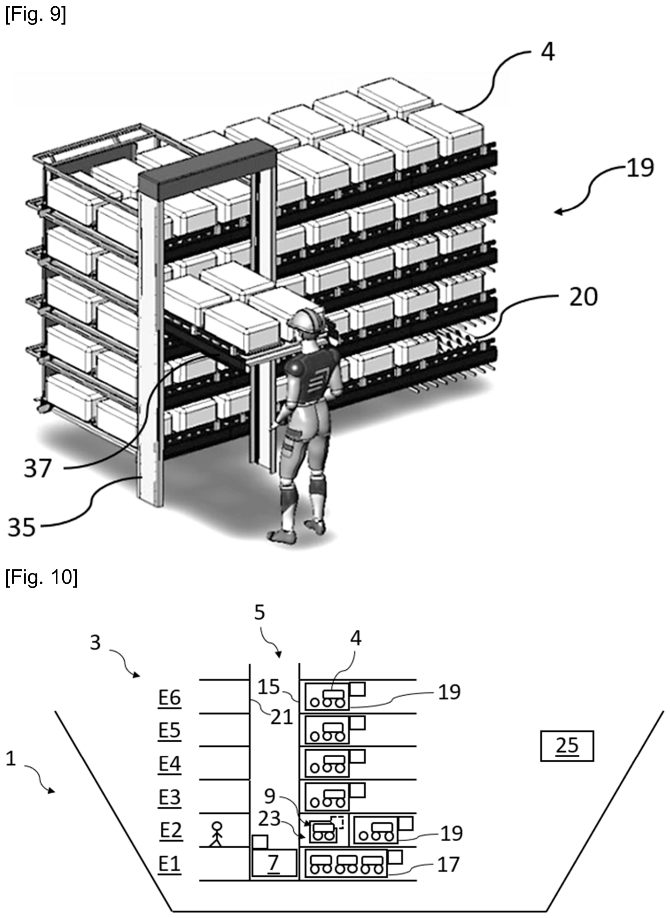

La figure 9 représente un convoyeur de réception 19 selon une variante de réalisation de l'installation 3.

Selon cette variante de réalisation, le convoyeur de réception 19 est à niveaux multiples. De préférence, le convoyeur de réception 19 comprend entre quatre et huit niveaux. Le convoyeur de réception 19 représenté sur la figure 9 est doté d'exactement cinq niveaux.

Avantageusement, le convoyeur de réception 19 est équipé d'un portail de déchargement 35, lequel supporte et permet de déplacer verticalement une plateforme à rouleaux 37 permettant de décharger un colis 4 ou plusieurs colis 4 depuis chacun des niveaux du convoyeur de réception 19.

Ainsi, selon une variante de réalisation de l'installation 3 combinant les variantes de réalisation représentées sur la figure 8, sur la figure 9 et sur la figure 10, tous les convoyeurs 13, 17, 19
- à savoir le convoyeur mobile 13, chaque convoyeur de chargement 17 et chaque convoyeur de réception 19 - comportent le même nombre de niveaux.

La figure 10 représente schématiquement un navire 1 comprenant une installation 3 selon un deuxième mode de réalisation.

L'installation 3 se distingue de l'installation 3 précédemment définie en ce que la zone de stockage 23 est située à un étage E2 pourvu d'un convoyeur de réception 19 ou pourvu d'un convoyeur de chargement 17.

De préférence, comme cela est représenté sur la figure 10, la zone de stockage 23 est située à un étage E2 pourvu d'un convoyeur de réception 19. Alternativement, la zone de stockage 23 est située à un étage pourvu d'un convoyeur de chargement 17.

Avantageusement, la zone de stockage 23 est située entre la cage d'ascenseur 5 et le convoyeur de réception 19. Alternativement, la zone de stockage 23 est située entre la cage d'ascenseur 5 et le convoyeur de chargement 17.

Un procédé de fonctionnement d'une installation 3 telle que précédemment décrite comporte avantageusement les étapes suivantes :
- comptage du nombre de colis 4 présents sur chaque convoyeur de réception 19 par les détecteurs de colis 27 ;
- détection d'un défaut de présence d'une personne P - en d'autres termes, détection de l'absence de toute personne - dans la cabine d'ascenseur 7 par le dispositif de détection de présence 29 ;
- commande du déplacement de la cabine d'ascenseur 7 par l'unité d'exploitation 25 ;
- en fonction du nombre de colis comptés par les détecteurs de colis 27, commande par l'unité d'exploitation 25 du transfert de la position de repos de l'unité mobile 9 vers la position d'utilisation ;
- chargement d'une quantité de colis 4 sur le convoyeur mobile 13 depuis le convoyeur de chargement 17 ;
- déchargement d'une quantité de colis 4 sur au moins un convoyeur de réception 19 depuis le convoyeur mobile 13 ;
- en fonction du nombre de colis comptés par les détecteurs de colis 27, commande par l'unité d'exploitation 25 du transfert de la position d'utilisation de l'unité mobile 9 vers la position de repos.

Avantageusement, le procédé de fonctionnement comporte en outre l'étape suivante :
- lors de la détection d'une personne P dans la cabine d'ascenseur 7 par le dispositif de détection de présence 29, fermeture de chaque premier accès 15.

Avantageusement, le procédé de fonctionnement comporte en outre l'étape suivante :
- lorsque l'unité mobile 9 est dans la position d'utilisation, fermeture de chaque second accès 21.

Avantageusement, l'étape suivante du procédé de fonctionnement :
- en fonction du nombre de colis comptés par les détecteurs de colis 27, commande par l'unité d'exploitation 25 du transfert de la position de repos de l'unité mobile 9 vers la position d'utilisation ;
est réalisée comme suit :
- comptage du nombre de colis présents sur chaque convoyeur de réception 19 par les détecteurs de colis 27, et lorsque le nombre de colis présents sur un convoyeur de réception 19 est inférieur à un seuil prédéterminé, commande par l'unité d'exploitation 25 du transfert de la position de repos de l'unité mobile 9 vers la position d'utilisation.

Avantageusement, l'étape suivante du procédé de fonctionnement :
- en fonction du nombre de colis comptés par les détecteurs de colis 27, commande par l'unité d'exploitation 25 du transfert de la position d'utilisation de l'unité mobile 9 vers la position de repos ;
est réalisée comme suit :
- comptage du nombre de colis 4 présents sur chaque convoyeur de réception 19 par les détecteurs de colis 27, et lorsque le nombre de colis présents sur chaque convoyeur de réception 19 est supérieur à un seuil prédéterminé, commande par l'unité d'exploitation 25 du transfert de la position d'utilisation de l'unité mobile 9 vers la position de repos.

L'invention n'est pas limitée aux modes et variantes de réalisation présentés et d'autres modes de réalisation apparaîtront clairement à l'homme du métier. Il est notamment possible de combiner les modes et variantes de réalisation entre eux.

## Revendications

1. Installation (3) de transport de colis (4), **caractérisée en ce qu'**elle comporte :
- une cage d'ascenseur (5) comprenant une cabine d'ascenseur (7) mobile entre au moins deux étages (E1-E6),
- une unité mobile (9) de transport de colis (4), l'unité mobile (9) comprenant un châssis amovible (11) portant un convoyeur mobile (13) de chargement/déchargement de colis (4), le convoyeur mobile (13) étant mobile uniquement en translation par rapport au châssis amovible (11) ;
l'installation étant telle que :
- la cabine d'ascenseur (7) est configurée pour recevoir l'unité mobile (9),
- au moins deux étages (E1-E6) comprennent chacun un premier accès (15) à la cabine d'ascenseur (7), parmi lesquels au moins un étage de chargement (E1) comporte un convoyeur de chargement (17) de colis (4) sur l'unité mobile (9) et au moins un étage de réception (E3-E6) comporte un convoyeur de réception (19) de colis (4) depuis l'unité mobile (9), chaque premier accès (15) étant configuré pour permettre le transfert de colis (4) soit depuis le convoyeur de chargement (17) vers le convoyeur mobile (13) soit depuis le convoyeur mobile (13) vers le convoyeur de réception (19), et
- l'unité mobile (9) est mobile entre une position de repos hors de la cabine d'ascenseur (7) et une position d'utilisation dans la cabine d'ascenseur (7), position d'utilisation dans laquelle le convoyeur mobile (13) occupe
une position déployée, pour effectuer un transfert de colis (4), se rapprochant du convoyeur de chargement (17) lors d'un transfert de colis (4) entre l'unité mobile (9) et le convoyeur de chargement (17), ou se rapprochant du convoyeur de réception (19) lors d'un transfert de colis (4) entre l'unité mobile (9) et le convoyeur de réception (19), et
une position rétractée dans l'unité mobile (9), une fois le transfert de colis (4) effectué, le transfert de la position d'utilisation vers la position de repos et inversement étant réalisé par passage de l'unité mobile (9) à travers le premier accès (15).

2. Installation (3) selon la revendication 1, dans laquelle chaque étage (E1-E6) comprend un second accès (21) à la cabine d'ascenseur (7), le second accès (21) étant configuré pour permettre l'accès de la cabine d'ascenseur (7) à au moins une personne (P) afin de permettre son transfert d'un étage (E1-E6) à un autre.

3. Installation (3) selon la revendication 1 ou 2, dans laquelle chaque convoyeur (13, 17, 19) est un convoyeur à rouleaux, de préférence un convoyeur à rouleaux motorisés (20).

4. Installation (3) selon l'une quelconque des revendications 1 à 3, dans laquelle chaque convoyeur (13, 17, 19) est à niveaux multiples, de préférence entre quatre et huit niveaux.

5. Installation (3) selon l'une quelconque des revendications 1 à 4, dans laquelle au moins un étage (E2) comporte une zone de stockage (23) recevant l'unité mobile (9) dans la position de repos, la zone de stockage (23) étant directement attenante à la cage d'ascenseur (5).

6. Installation (3) selon la revendication 5, dans laquelle la zone de stockage (23) est située entre la cage d'ascenseur (5) et le convoyeur de réception (19), ou la zone de stockage (23) est située entre la cage d'ascenseur (5) et le convoyeur de chargement (17).

7. Installation (3) selon l'une quelconque des revendications 1 à 6, laquelle comprend une unité d'exploitation (25) et des détecteurs de colis (27) configurés pour réaliser le comptage de colis (4) présents sur chaque convoyeur (13, 17, 19), l'unité d'exploitation (25) étant configurée pour commander en fonction du nombre de colis (4) comptés par les détecteurs de colis (27), à la fois le transfert de la position d'utilisation de l'unité mobile (9) vers la position de repos et inversement, la quantité de colis (4) chargés sur le convoyeur mobile (9) par le convoyeur de chargement (17), et la quantité de colis (4) déchargés par le convoyeur mobile (13) sur le convoyeur de réception (19).

8. Installation (3) selon la revendication 7, dans laquelle chaque colis (4) est doté d'un identificateur configuré pour être détecté par les détecteurs de colis (27), l'unité d'exploitation (25) étant configurée pour commander en fonction du nombre de colis (4) comptés par les détecteurs de colis (27) et en fonction d'une donnée présente dans l'identificateur de chaque colis (4) et détectée par les détecteurs de colis (27), la donnée étant relative à la nature du colis (4) respectif, à la fois le transfert de la position d'utilisation de l'unité mobile (9) vers la position de repos et inversement, la quantité de colis (4) chargés sur le convoyeur mobile (9) par le convoyeur de chargement (17), et la quantité de colis (4) déchargés par le convoyeur mobile (13) sur le convoyeur de réception (19).

9. Installation (3) selon la revendication 7 ou 8, laquelle comprend un dispositif de détection de présence (29), l'unité d'exploitation (25) étant configurée pour empêcher le transfert de la position de repos vers la position d'utilisation tant que le dispositif de détection de présence (29) détecte la présence d'une personne (P) dans la cabine d'ascenseur (7).

10. Installation (3) selon l'une quelconque des revendications 1 à 9, dans laquelle l'unité mobile (9) comprend un mécanisme de transfert configuré pour réaliser le transfert de la position d'utilisation vers la position de repos et inversement.

11. Installation (3) selon la revendication 10, dans laquelle le mécanisme de transfert comprend un mécanisme moteur configuré pour réaliser automatiquement le transfert de la position d'utilisation vers la position de repos et inversement.

12. Navire (1) comportant une installation (3) selon l'une quelconque des revendications 1 à 11.
